# EUROPEAN PATENT SPECIFICATION

(11) **EP 1 075 178 B1**
(45) Date of publication and mention of the grant of the patent: **22.02.2006**
(21) Application number: 99921275.6
(22) Date of filing: 29.04.1999
(51) Int. Cl.: A01K 1/00, A01K 1/015

(54) **STANDING CUBICLE PARTITIONS**
STEHENDE ALKOVENTRENNUNGEN
SEPARATIONS VERTICALES DE STALLES

(30) Priority: 01.05.1998 NL 1009048
(43) Date of publication of application: 14.02.2001
(73) Proprietor: Weelink Beheer B.V., 9481 AD Vries (NL)
(72) Inventor: WEELINK, Erwin, Antoni, Jacobi, NL-9403 AJ Assen (NL)
(74) Representative: Grootscholten, Johannes A.M.
(86) International application number: PCT/NL1999/000262
(87) International publication number: WO 1999/056529

(56) References cited:
- EP-A- 0 322 970
- DE-A- 3 416 379
- DE-U- 29 617 690
- US-A- 2 720 861

## Description

The present invention relates to a stall with cubicle partitions, between which cubicles are situated, and further to cubicle partitions per se.

Cubicle partitions according to the preamble of claims 1 and 10 are known from EP-A-0.322.970, wherein a two-dimensional fence bent from a metal tube is arranged or suspended on a support construction using fixing means. The support construction can be formed by horizontally running metal tubes or beams arranged on a post or at a distance from and on a wall of the stall.

The arrangement of the fences bent from metal tube as cubicle partitions on horizontally running metal tubes forming carriers has the drawback, not only, that lifting these partitions is heavy work, but also, that because of the form suitable as a partition between cubicles precise positioning thereof is as a result of the weight and form thereof very awkward. The known cubicle partitions are even "top-heavy" as a consequence of the form and must be held in position constantly during the already laborious fitting thereof to the support construction, for which purpose two fitters are required in each case during mounting, i.e. one fitter to hold, and one fitter to fix the cubicle partition to the support construction. This results in the possibility of the partition falling over during positioning. Such a situation can create the danger of injury to the fitters, as well as insufficiently accurate placement of the partitions, which will hamper fixation thereof to the support construction.

Also cubicle partitions are known from DE-A-3.416.379, wherein for the fence bent tube is employed, while a separate foot is provided on the extremities of the tube in the form of a plate.

The cubicles partitions in a stall according to DE-A-3.416.379 have for a disadvantage, that the plates are small, especially in relation to the size and weight of the partitions, and provide no solution to the problems of partitions falling over while they are being positioned. Moreover, providing the plates at the ends of the bent tubes requires a production step after bending the tubes, thereby increasing the complexity of production and increasing costs thereof.

Both known stalls and partitions between cubicles have a further disadvantage, that where mats are employed on the stall floor for the live stock to lie on, these mats can shift in practically all directions with no restriction. The mats have to be repositioned often, which involves tiresome work for farmhands.

The present invention has for its object to remedy or at least lessen the above stated drawbacks and disadvantages and for this purpose a stall, a cubicle partition an a mat are provided with the distinguishing features of the characterizing portions of claims 1 and 10, respectively.

According to the invention, mats on the stall floor in the cubicles are held in place by the cubicle partitions, where the foot or stand is herein formed from the metal tube and extends in a plane wherein the partition can stand stably of itself with no danger of falling over and can simply be shifted as such over the stall floor until the desired final position thereof has been reached. Fixing of the partition is moreover simple, when the desired position of the partition is reached, by fixing separate metal tube parts forming the foot to for instance the stall floor or by still fixing to a horizontally running mounting tube or beam, which cannot thus be deemed a support construction.

In a preferred embodiment the foot extends over the stall floor along a part of the periphery of at least one of the cubicle partitions. The livestock wishing to make use of the cubicle, in particular cows, is thus not impeded by metal tube parts when an individual animal wishes to lie down in the cubicle between separate partitions.

In order to further increase the comfort of the livestock in the cubicles use can be made of the measures according to claim 3, wherein the stall floor is covered with a mat at the location of the cubicle. The softness and texture of a meadow is then simulated with such a mat, particularly so as to eliminate the hardness of the stall floor which is usually made from concrete. In a preferred embodiment the stall has the property of claim 4, wherein the mat has a thickness increasing in the direction of the periphery of the cubicle and, additionally or alternatively, has the property of claim 5, wherein the mat extends over the foot of the partition. In both cases a surface is provided for the livestock where it can lie down comfortably. In the case the mat extends over the foot, it is even such that any discomfort resulting from metal tubes of the cubicle partition is eliminated by the mat.

In the embodiment of the mat with a thickness increasing along the periphery, a stall according to claim 6 has the feature that the mat has no increasing thickness in the direction of the entrance of the cubicle. No threshold is hereby formed close to the entrance of the cubicle, which is then formed between two cubicle partitions, and an animal can enter the cubicle without obstruction.

The present invention will be described hereinbelow with reference to the annexed drawings, in which:
fig. 1 shows a perspective view of partitions in a stall according to the present invention;
fig. 2 shows a schematic side view of one of the partitions shown in fig. 1;
fig. 3 is a perspective view of alternative partitions in a stall according to the present invention;
fig. 4 shows another alternative embodiment of a partition in a stall according to the present invention;
fig. 5 shows yet another alternative embodiment of partitions in a stall according to the present invention;
fig. 6 shows a further embodiment of partitions in a stall according to the present invention;
fig. 7 shows a two-sided variant; and
fig. 8 shows a further embodiment.

In the various figures corresponding components in the different embodiments of the stalls according to the present invention are designated with the same reference numerals.

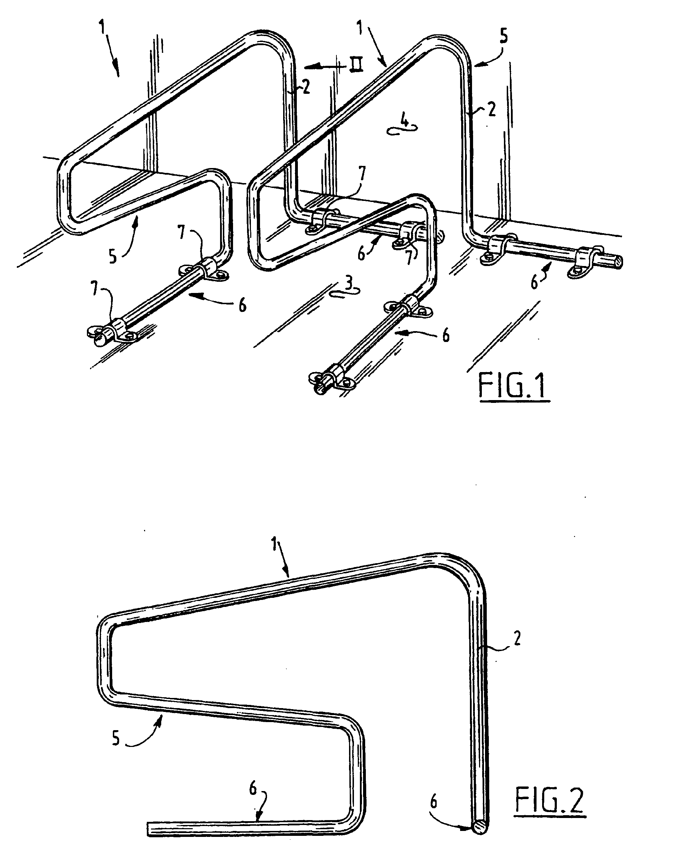

Fig. 1 shows a perspective view of partitions 1 formed from a single metal tube 2 in the stall, the stall floor 3 and stall wall 4 of which are shown schematically. Each of the partitions 1 consists of a fence 5 in substantially vertical direction and a foot 6 which is formed by metal tube parts in different directions which together extend in a plane corresponding with stall floor 3. Each of the partitions 1 thus forms a stably positionable unit which can remain standing on the foot 6 thereof without falling over.

After desired positioning of partitions 1 relative to each other, and in particular the mutual distances therebetween, feet 6 are fixed to stall floor 3 by means of brackets 7 without any appreciable danger of shifting and disruption of the chosen positioning as a result of the relatively great weight of partitions 1, wherein arrangement of brackets 7 will not disturb the set positioning.

Fig. 2 shows a schematic side view of one of the partitions 1 in fig. 1, but without brackets 7. This view therefore serves to elucidate the form required for forming of an effective partition, for which various alternatives are available such as those which will be discussed below.

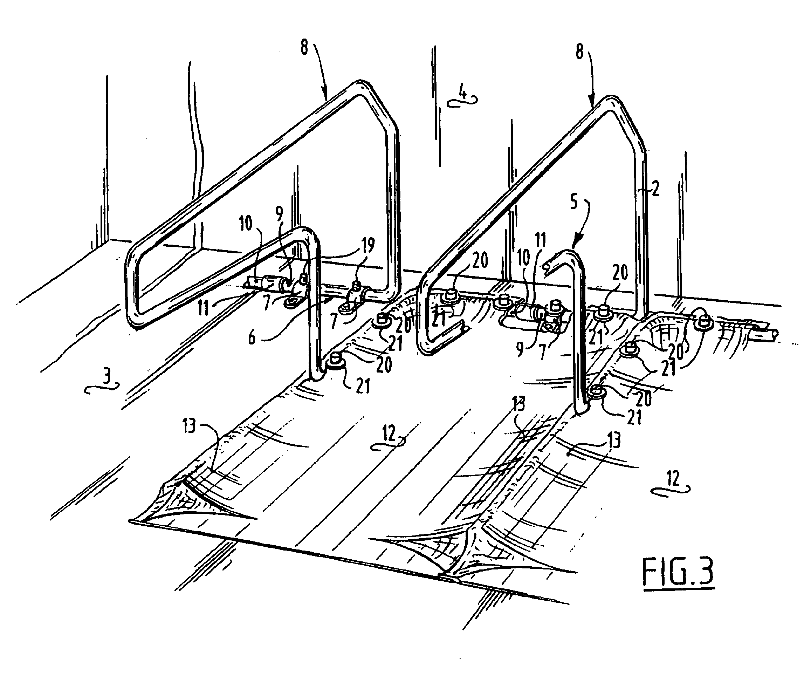

Fig. 3 shows an embodiment of partitions 8. The foot of each of the partitions extends here at the rear of partition 8 in opposing directions, where this was not the case in the embodiment of fig. 1. That is, partition 8 in the embodiment shown here has legs 9 and 10 extending over the stall floor along stall wall 4. The respective legs 9, 10 of the separate partitions 8 can herein be connected by means of for instance a coupling piece 11 to which these respective legs 9, 10 can be fixed. Coupling piece 11 is shown in the broken-away part of the mat 12 to be further described hereinbelow and can be placed in legs 9, 10 or pushed thereover as a sleeve. Furthermore, as option, the mutual distance between the individual partitions 8 can be determined on the basis of the length of coupling piece 11, which is for instance provided for this purpose with stops, this not being shown here. Additionally, coupling piece 11 can further be provided with indications representing the distances between the outer ends of respective legs 9, 10 of separate contiguous partitions 8. These indications are not shown in fig. 3.

Laid on stall floor 3 are mats 12 which each cover one cubicle formed between partitions 8, for instance about 1,20 m wide and about 2.50 m long. Mats 12 have an increasing thickness in the direction of the periphery of the cubicle as seen from the centre thereof. This increasing thickness forms an edge strip 13 of mats 12. Due to these rising edges 13 the mat 12 forms a pit with a flat middle part over a width of about 0.60 m in which an animal can lie down and will be pushed to the centre thereof. Thus is also prevented that a cow will lie down against the fence and thus load partition 8 in undesired manner. Edges 13 do not extend along the entrance to the cubicle so that a threshold is not formed and accumulation of dirt is avoided and dirt removal is facilitated. The metal tube parts of foot 6 of partitions 8 are located under this edge strip 13 of mats 12. In this way mats 12 form a covering of the whole surface of stall floor 3 intended for cubicles, wherein the metal tube parts of partitions 8 forming the feet 6 thereof are also covered by mats 12, and the edge strips 13 thereof in particular. A surface is hereby provided on which the livestock can lie comfortably without the discomfort of feet 6 in that part of stall floor 3 intended for cubicles.

Mats 12 can be fixed in diverse ways relative to the stall floor. In the embodiment shown in fig. 3 use is made for this purpose of brackets 7 which serve per se to fix partitions 8. Brackets 7 are provided with bushes 19 with external screw thread onto which screw caps 20 can be screwed to clamp mat 12 between foot 6 and screw caps 20, for which purpose screw caps 20 are provided with flanges. For passage of bushes 19 holes encircles by metal or plastic eyelets (not shown) can be provided in mats 12. The mats 12 can therefore also be arranged or fixed for release or for disassembly.

When screw caps 20, for instance of plastic, are released, mats 12 can be removed separately per cubicle, for instance for cleaning thereof. It is shown that each mat 12 covers a single cubicle, although this is not limited hereto since mats 12 can also cover more than one cubicle depending on the form of feet 6.

As possible alternative use can be made of belts or cords to fix mats 12 to for instance feet 6, fastening brackets 7 or other element, particularly when mats 12 have no rising edges (13 in fig. 3).

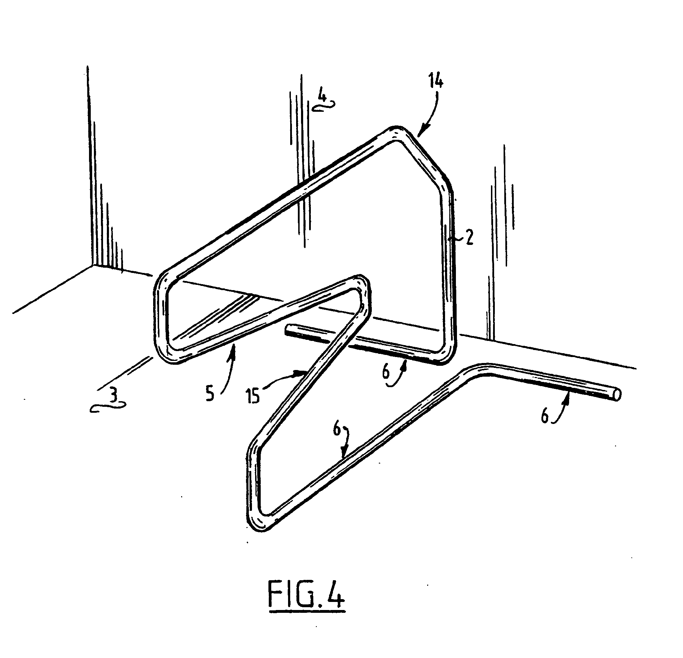

Fig. 4 shows yet another embodiment, wherein the partition is designated 14. Foot 6 of this partition 14 extends further into the stall from stall wall 4, wherein fence 5 is provided with a protrusion 15, wherein separation between neighbouring cubicles formed by partition 14 is improved since partition 14 forms a better separation.

Extending the foot 6 in the direction away from stall wall 4 moreover brings about a displacement of the tilting point of partition 14 away from stall wall 4 so that loading of partition 14 on the top thereof at a distance from stall wall 4 entails lower load on the fastenings of foot 6 on stall floor 3. This embodiment otherwise corresponds substantially with that shown in fig. 3.

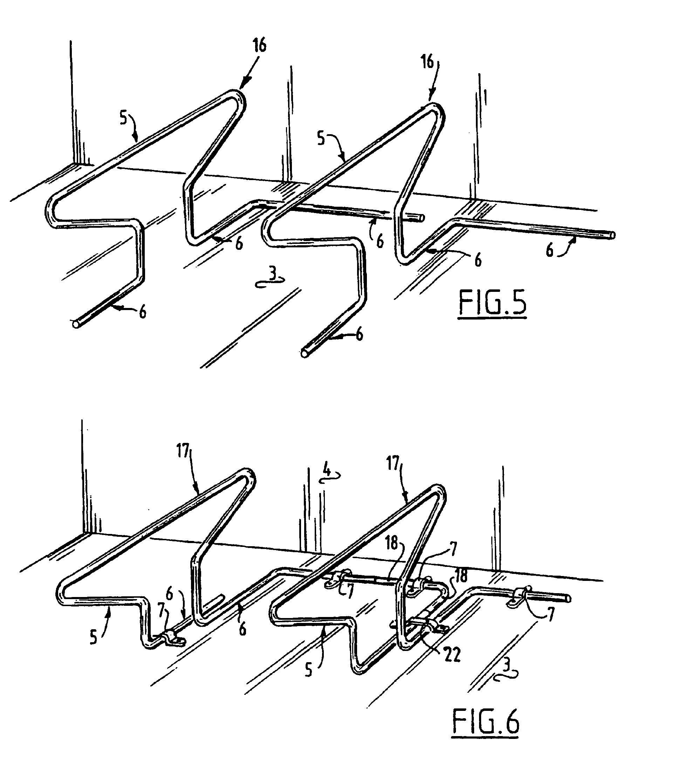

Fig. 5 shows two partitions 16 in another embodiment of the present invention. These partitions 16 also have feet 6 and each have a fence 5 supported thereby. Partitions 16 differ from partitions 1 in fig. 1 substantially in the form of the fence 5, which here in fig. 5 is substantially funnel-shaped, while fig. 1 shows r-shaped fences 5.

In fig. 6 the partitions 17 have fences 5 of a similar form as in fig. 5, wherein however the feet 6 have a differing form which is such that feet 6 of contiguous partitions 17 can be coupled by means of a coupling piece 18 with a bend therein. Coupling piece 18 is L-shaped, wherein the leg of coupling piece 18 extending along stall wall 4 determines the distance between contiguous partitions 17. For fixing of partitions 17 use is once again made of brackets 7, although here in fig. 6 also of double brackets 22, wherein two metal tube parts can be fixed simultaneously to the stall floor. Mats can once again be placed, as shown in fig. 3, over the metal tube parts forming feet 6 and the stall floor 3 between the cubicle partitions.

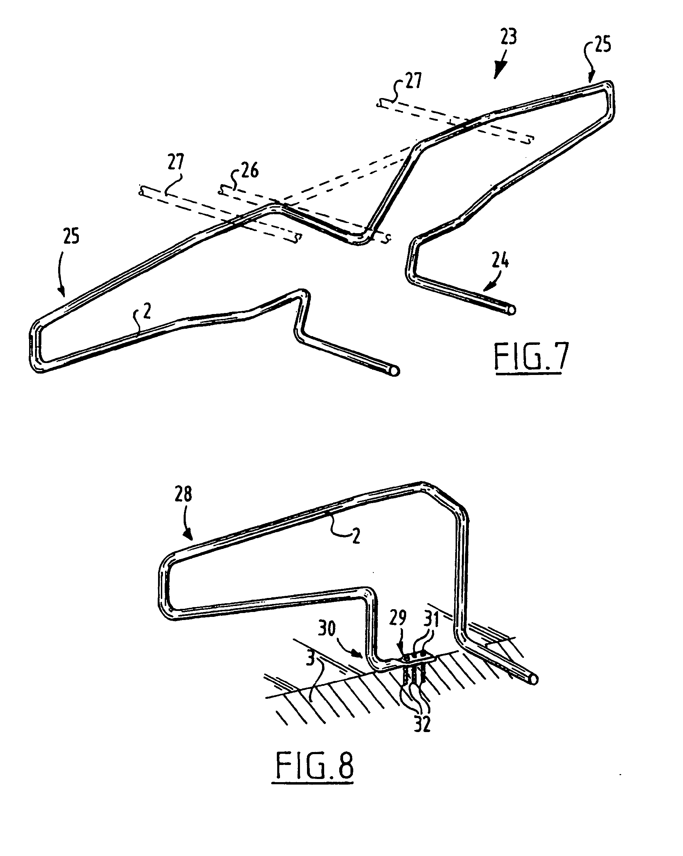

The partition 23 shown in fig. 7 is two-sided, i.e. two actual partitions 25 extend in opposing directions relative to foot 24. It is thus possible to form cubicles on either side of a separating tube 26 which are limited by partitions 23. On either side of separating tube 26 shoulder bars 27 can be arranged over partitions 23, which bars function as stop. The animals which enter the cubicle partition and strike against shoulder bars 27 will herein lie down of their own accord.

The partition 28 shown in fig. 8 is distinguished from the above described embodiments substantially by a flattening 29 of foot 30. Arranged in flattening 29 are holes 31 through which bolts 32 can be arranged so as to fix partition 28 to stall floor 3.

In the embodiment shown here the flattening 29 is arranged in foot 30 close to the outer end of a tube part, but can likewise be provided at another random position as long as flattening 29 is arranged in a part of foot 30 which is actually in contact with stall floor 3.

Many possible alternative embodiments will occur to the skilled person after examination of the foregoing description in combination with the appended claims. Many other forms of fence are thus possible as well as many other forms of the foot, as long as the foot is formed integrally with the partitions and the partitions can preferably be formed or bent integrally, wherein the foot provides an adequate support to enable stable placing thereof during mounting and thereafter of the partitions. In the described embodiments the cubicle partitions are fixed in each case to the stall floor. Additionally or alternatively, upward extending parts of for instance the fence can be fixed to mounting tubes or beams which preferably all run horizontally. The cubicle partitions according to the invention can further be assembled from more than one bent metal tube, wherein the transition between metal tube components does not have to coincide with the transition between foot (or stand) and the fence forming the actual partition. The invention is therefore only limited by that which is defined in the appended claims.

## Claims

1. Stall having a stall floor and cubicle partitions for livestock thereon, wherein the cubicles are formed between partitions (1; 8; 14; 16; 17; 23; 28) which each comprise a substantially single bent metal tube (2) with a flat foot (6, 24, 30) placeable on the stall floor and a fence (5) forming the partition in a plane upright from the stall floor.

2. Stall as claimed in claim 1, wherein the foot extends over the stall floor along a part of the periphery of at least one of the cubicles.

3. Stall as claimed in claim 1 or 2, wherein the fence forming the partition extends in opposing directions relative to the foot (24).

4. Stall as claimed in claim 1, 2 or 3, wherein the foot (30) comprises a flattening (20) with holes (31) therein for passage of fixing means (32).

5. Stall as claimed in any of the foregoing claims, wherein the stall floor is covered with a mat (12) at the position of the cubicle.

6. Stall as claimed in claim 5, wherein the mat has a thickness (13) increasing in the direction of the periphery of the cubicle.

7. Stall as claimed in claim 5 or 6, wherein the mat (12) extends over the foot of the partition.

8. Stall as claimed in any of the foregoing claims 5, 6 and 7, wherein the mat (12) is arranged releasably on the foot (6) of the partition.

9. Stall as claimed in claim 6, wherein the mat does not have an increasing thickness in the direction of the entrance of the cubicle.

10. Cubicle partition (1; 8; 14; 16; 17; 23; 28) such as evidently intended for a stall as claimed in any of the foregoing claims.

## Patentansprüche

1. Stall, der einen Stallboden und darauf Box-Raumteiler für Vieh hat, wobei die Boxen zwischen Raumteilern (1; 8; 14; 16; 17; 23; 28) gebildet werden, die je ein im wesentlichen einzelnes gebogenes Metallrohr (2) mit einem flachen Fuß (6, 24, 30), der auf dem Stallboden plazierbar ist, und einen Zaun (5), der den Raumteiler in einer Ebene senkrecht zum Stallboden bildet, aufweisen.

2. Stall gemäß Anspruch 1, wobei sich der Fuß über den Stallboden entlang eines Teils des Randbereichs von mindestens einer der Boxen ausdehnt.

3. Stall gemäß einem der Ansprüche 1 oder 2, wobei sich der Zaun, der den Raumteiler bildet, bezogen auf den Fuß (24) in gegenläufige Richtungen ausdehnt.

4. Stall gemäß einem der Ansprüche 1, 2 oder 3, wobei der Fuß (30) eine Abflachung (20) mit Löchern (31) darin für den Durchgang von Befestigungsmitteln (32) aufweist.

5. Stall gemäß einem der vorangehenden Ansprüche, wobei der Stallboden mit einer Matte (12) an der Stelle der Box bedeckt ist.

6. Stall gemäß Anspruch 5, wobei die Matte eine Dicke (13) hat, die in Richtung der Randbereiche der Box zunimmt.

7. Stall gemäß einem der Ansprüche 5 oder 6, wobei die Matte (12) sich über den Fuß des Raumteilers ausdehnt.

8. Stall gemäß einem der vorangehenden Ansprüche 5, 6 und 7, wobei die Matte (12) lösbar auf dem Fuß (6) des Raumteilers angeordnet ist.

9. Stall gemäß Anspruch 6, wobei die Matte keine zunehmende Dicke in Richtung des Eingangs der Box hat.

10. Box-Raumteiler (1; 8; 14; 16; 17; 23; 28), der offensichtlich für einen Stall, wie in irgendeinem der vorangehenden Ansprüche beansprucht, gedacht ist.

## Revendications

1. Stalle, comprenant un sol de stalle et des séparations de stalle pour du bétail porté dessus, dans laquelle les séparations de stalle sont formées entre des séparations (1 ; 8 ; 14 ; 16 ; 17 ; 23 ; 28) qui comprennent chacune un unique tube en métal (2) sensiblement courbé avec un pied plat (6, 24, 30) pouvant être placé sur le sol de la stalle et une clôture (5) formant la séparation sur un plan vertical à partir du sol de la stalle.

2. Stalle selon la revendication 1, dans laquelle le pied s'étend sur la totalité du sol de la stalle le long d'une partie de la périphérie d'au moins une des séparations de stalle.

3. Stalle selon la revendication 1 ou 2, dans laquelle la clôture formant la séparation s'étend dans des directions opposées par rapport au pied (24).

4. Stalle selon la revendication 1, 2 ou 3, dans laquelle le pied (30) comprend une partie aplatie (20) munie de trous (31) en elle pour le passage de moyens de fixation (32).

5. Stalle selon l'une quelconque des revendications précédentes, dans laquelle le sol de la stalle est recouvert d'un tapis (12) au niveau de l'emplacement de la séparation de stalle.

6. Stalle selon la revendication 5, dans laquelle le tapis a une épaisseur (13) qui augmente dans la direction de la périphérie de la séparation de stalle.

7. Stalle selon la revendication 5 ou 6, dans laquelle le tapis (12) s'étend par dessus le pied de la séparation.

8. Stalle selon l'une quelconque des revendications précédentes 5, 6 et 7, dans laquelle le tapis (12) est disposé de façon amovible sur le pied (6) de la séparation.

9. Stalle selon la revendication 6, dans laquelle le tapis n'a pas une épaisseur qui augmente dans la direction de l'entrée de la séparation de stalle.

10. Séparation de stalle (1 ; 8 ; 14 ; 16 ; 17 ; 23 ; 28) comme cela est prévu manifestement pour une stalle selon l'une quelconque des revendications précédentes.
